# EUROPEAN PATENT SPECIFICATION

(11) **EP 2 098 691 B1**
(45) Date of publication and mention of the grant of the patent: **17.07.2013**
(21) Application number: 08425137.0
(22) Date of filing: 06.03.2008
(51) Int. Cl.: F01K 23/10, H02P 9/04

(54) **Method for controlling a combined-cycle plant, and combined-cycle plant**
Verfahren zur Steuerung eines Kombikraftwerks und Kombikraftwerk
Procédé de contrôle d'une installation à cycle combiné, et installation à cycle combiné

(43) Date of publication of application: 09.09.2009
(73) Proprietor: ANSALDO ENERGIA S.P.A., 16152 Genova (IT)
(72) Inventor: Repetto, Enrico, 16149 Genova (IT); Traverso, Raffaele, 16125 Genova (IT); Nahum, Corrado, 16145 Genova (IT)
(74) Representative: Bergadano, Mirko

(56) References cited:
- EP-A- 0 465 137
- JP-A- 8 200 016
- US-B1- 6 339 926
- ACKENHEIL R ET AL: "PRIMARY FREQUENCY CONTROL FOR COMBINED CYCLE POWER PLANTS" VGB POWERTECH, VGB POWERTECH, ESSEN, DE, vol. 86, no. 3, 1 January 2006 (2006-01-01), pages 76-78, XP001241930 ISSN: 1435-3199

## Description

The present invention relates to a method and a device for controlling a combined-cycle plant and to a combined-cycle plant.

As is known, in modern networks for production and distribution of electrical energy, all the plants must be able to participate in the regulation of the network parameters as a function of the loads required by users. In particular, the standards envisage that the production plants will make available, in extremely short times, a percentage of the nominal power supplied to compensate for fluctuations of the network parameters.

Combined-cycle plants, which comprise a gas turbine and a steam turbine, meet in a differentiated way power requirements from the network, in particular for the frequency primary regulation, during so-called subfrequency transients. In these transients, the mains frequency tends to decrease on account of the excessive load, and the variation must be compensated for by supply of a power surplus. According to the cases, the intervention of disturbance compensation can be entrusted to the gas turbine alone or else to the gas turbine and the steam turbine in combination. In these cases, however, combined-cycle plants suffer from certain drawbacks, which can limit the capacity of response of the steam turbine.

As has been mentioned, in the well-nigh totality of cases, combined-cycle plants comprise a gas turbine and a steam turbine, which in turn includes high-pressure, intermediate-pressure, and low-pressure sections, and are moreover provided with a steam generator that exploits the hot exhaust fumes of the gas turbine. The steam generator generally comprises cylindrical bodies or drums for separating the phases, one for the high-pressure section of the steam turbine, one for the intermediate-pressure section, and one for the low-pressure section. In addition, in order to increase the available energy jump and hence the efficiency of the plant, the steam coming from each of the drums is superheated before being fed to the respective section of the steam turbine. The steam flowrate fed to the high-pressure, intermediate-pressure, and low-pressure sections is regulated by purposely provided supply valves.

When the participation of the steam turbine in the frequency primary regulation is required, the steam flowrate to the high-pressure section is increased suddenly, to increase the power delivered. In this way, also the steam pressure at exhaust from the high-pressure section increases. Before entry into the intermediate-pressure section, the steam processed by the high-pressure section is mixed with superheated steam coming from the intermediate-pressure drum. The increase in the pressure at exhaust from the high-pressure section causes a transient decrease in the flowrate of superheated steam from the intermediate-pressure drum, since the pressure drop between the intermediate-pressure drum and the point of injection of the superheated steam (in practice the exhaust of the high-pressure section) is abated. The steam flowrate supplied to the intermediate-pressure section of the steam turbine increases slowly on account of the lower contribution of superheated steam from the intermediate-pressure drum, and hence, in an initial stage of the subfrequency transient, it is possible to obtain only a limited increase of delivered power.

JP 02 200016 A discloses a load control system for a combined-cycle power plant that includes mutually co-operating high-pressure valve and low-pressure valve for a gas turbine.

Other examples of known load control systems are disclosed in EP-A-0 465 137 and in ACKENHEIL R ET AL: "PRIMARY FREQUENCY CONTROL FOR COMBINED CYCLE POWER PLANTS" VGB POWERTECH, VGB POWERTECH, ESSEN, DE, vol. 86, no. 3, 1 January 2006 (2006-01-01), pages 76-78

The aim of the present invention is hence to provide a method for controlling a combined-cycle plant, a device for controlling a combined-cycle plant, and a combined-cycle plant that are free from the limitations described.

According to the present invention a method for controlling a combined-cycle plant and a combined-cycle plant are provided, as claimed in Claims 1 and 7, respectively.

The present invention will now be described with reference to the annexed drawings, which illustrate a non-limiting embodiment thereof and in which:
- Figure 1 is a simplified block diagram of a combined-cycle plant in accordance with an embodiment of the present invention; and
- Figure 2 is a more detailed block diagram of a part of the combined-cycle plant of Figure 1.

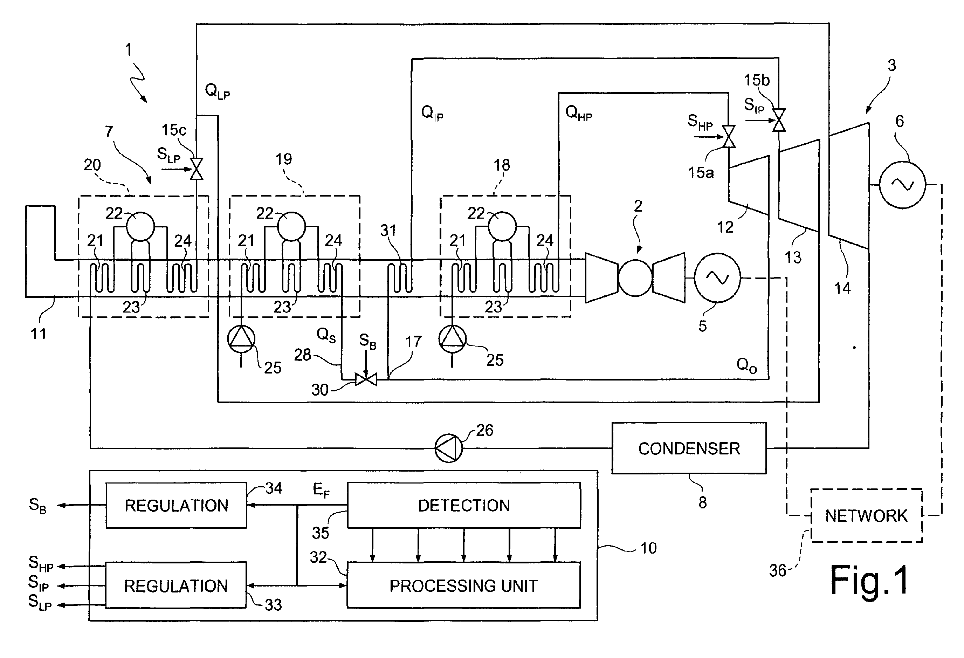

As shown in Figure 1, a combined-cycle plant for the production of electrical energy comprises a gas turbine 2, a steam turbine 3, two alternators 5, 6, coupled, respectively, to the gas turbine 2 and to the steam turbine 3, a steam generator 7, a condenser 8, and a control device 10. Alternatively, the plant can comprise a gas turbine, a steam turbine, and an alternator on one and the same shaft.

The gas turbine 2 receives a plurality of control signals (not shown herein), from the control device 10, for regulation of the power supply and, in general, of the operating parameters. The exhaust fumes of the gas turbine 2 are channelled along a duct 11 and supply a source of heat for the steam generator 7.

The steam turbine 3 comprises a high-pressure section 12, an intermediate-pressure section 13, and a low-pressure section 14, which receive, respectively, a high-pressure steam flowrate Q_{HP}, an intermediate-pressure steam flowrate Q_{IP}, and a low-pressure steam flowrate Q_{LP} from the steam generator 7. In a different embodiment (not illustrated), the steam turbine comprises the high-pressure section and an intermediate-low pressure section. The high-pressure steam flowrate Q_{HP}, the intermediate-pressure steam flowrate Q_{IP}, and the fraction of the low-pressure steam flowrate Q_{LP} coming from the steam generator 7 are regulated by respective supply valves 15a, 15b and 15c actuated by the control device 10 by a first supply-regulation signal S_{HP}, a second supply-regulation signal S_{IP}, and a third supply-regulation signal S_{LP}, respectively.

An output flowrate Q_{O} coming from the high-pressure section 12 is fed to a mixing node 17, where it is mixed to a flowrate Q_{S} at output from the intermediate-pressure element 19 of the steam generator 7. Likewise, the flowrate coming from the intermediate-pressure section 13 is mixed with a flowrate supplied by the steam generator 7 to form the low-pressure steam flowrate Q_{LP} to be supplied to the low-pressure section 14 of the steam turbine 3.

The steam generator 7 comprises a high-pressure element 18, an intermediate-pressure element 19, and a low-pressure element 20, each of which comprises an economizer 21, a drum 22, an evaporator 23, and an superheater 24, the operation of which is known and will not be discussed in detail.

The economizers 21 of the high-pressure element 18 and of the intermediate-pressure element 19 receive water from respective supply pumps 25, while the economizer 21 of the low-pressure element receives water from a collection tank of the condenser 8, by means of an extraction pump 26.

The high-pressure element 18 supplies the high-pressure steam flowrate Q_{HP} to the high-pressure section 12. The low-pressure element 20 supplies a flowrate of superheated low-pressure steam, which, as has been mentioned previously, concurs in forming the low-pressure steam flowrate Q_{LP} to be supplied to the low-pressure section 14 of the steam turbine 3.

The intermediate-pressure element 19 supplies a superheated steam flowrate Q_{S} to the mixing node 17, where it is added to the output flowrate Q_{O} coming from the high-pressure section 12 of the steam turbine 3.

Arranged along a duct 28 between the superheater 24 of the intermediate-pressure element 19 and the mixing node 17, there is a regulation valve 30, also referred to as "bridge" valve, which contributes to determining the conditions of the flowrate of superheated steam Q_{S} introduced into the mixing node 17. The regulation valve 30 is controlled by the control device 10 through a mixing regulation signal S_{B}, as explained hereinafter.

As already mentioned, the mixing node 17 receives the superheated steam flowrate Q_{S} from the intermediate-pressure element 19, and the output flowrate Q_{O} from the high-pressure section 12 of the steam turbine 3. Downstream of the mixing node 17 the intermediate-pressure steam flowrate Q_{IP} is thus obtained, which is superheated in a further superheater 31, before being supplied to the intermediate-pressure section 13 of the steam turbine 3.

The control device 10 comprises a first regulation module 33, a second regulation module 34, and a detection module 35.

The first regulation module 33 supplies the first, second and third supply-regulation signals S_{HP}, S_{IP} and S_{LP}, to regulate, respectively, the high-pressure steam flowrate Q_{HP}, the intermediate-pressure steam flowrate Q_{IP} and the fraction of the low-pressure steam flowrate Q_{LP} coming from the low-pressure element 20 of the steam generator.

The second regulation module 34 supplies the mixing regulation signal S_{B} for controlling the regulation valve 30.

The detection module 35 is configured for detecting subfrequency transients of a network 36 for the distribution of electrical energy connected to the plant 1 and, moreover, for measuring a plurality of quantities relating to the gas turbine 2 and to the steam turbine 3, which are made available to the processing unit 32 (for example, the energy released, the pressures and temperatures of the evolving fluids, etc.).

By "subfrequency transient" is meant here and in what follows a transient operation condition of the network 36 where the mains frequency is lower than a nominal operating frequency (normally 50 Hz or 60 Hz). The deviation with respect to the nominal frequency, referred to as frequency error E_{F}, is supplied to the first regulation module 33 and to the second regulation module 34.

In nominal operating conditions, when the frequency error E_{F} is zero, the control device 10 maintains the first supply valve 15a and the regulation valve 30 at a partial opening degree, so that for both there is a margin for possible regulations.

When in the network 36 a subfrequency transient occurs, the plant 1 participates in the regulation by supplying a higher power both through the gas turbine 2 and through the steam turbine 3.

As regards the steam turbine 3, in particular, the first regulation module 33 of the control device 10, in response to the detection of a subfrequency transient, determines an increase in the high-pressure flowrate Q_{HP} by opening the first supply valve 15a. The degree of opening of the first supply valve 15a is determined on the basis of the frequency error E_{F} supplied by the detection module 35.

At the same time, the second regulation module 34 increases the opening degree of the regulation valve 30 to an extent correlated to the frequency error E_{F}, so as to compensate for the pressure increase at output from the high-pressure section 12 of the steam turbine 3 (due to the increase in the flowrate of high-pressure steam Q_{HP}), with a decrease of the head loss associated to the regulation valve 30, and thus prevent a reduction in the superheated steam flowrate Q_{S}.

In practice, the opening of the regulation valve 30 decreases the hydraulic resistance thereof and hence, albeit in the presence of a decrease in the pressure drop across the regulation valve 30, the superheated steam flowrate Q_{S} remains substantially unvaried. The conditions of the steam fed to the intermediate-pressure section 13 of the steam turbine 3 are not hence degraded following upon the action of regulation, and the steam turbine 3 is in a condition of delivering a higher power in the initial stage of the transient. Consequently, also the contribution of the plant 1 upon primary regulation of frequency during the subfrequency transients is optimized.

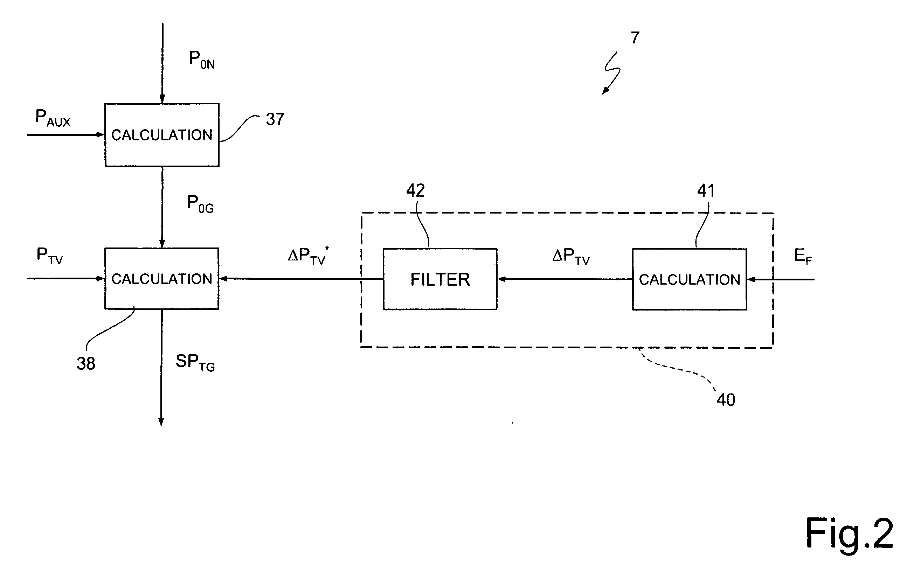

As shown in Figure 2, the control device 10 intervenes through the processing unit 32 also to prevent the set point of the gas turbine 2 from being suddenly modified following upon the intervention of the steam turbine 3 in the frequency primary regulation.

The processing unit 32 comprises a first calculation module 37, a second calculation module 38, and a correction network 40, which in turn includes a third calculation module 41 and a filter module 42.

The first calculation module 37, starting from a plant net power reference P_{0N}, which can be programmed and set in a known manner automatically or by an operator, determines a gross power reference P_{0G} to be delivered by the plant 1 by adding the power P_{AUX} absorbed by the auxiliary loads of the plant 1 (a measurement of the power P_{AUX} is supplied by the detection module 35). The second calculation module 38 determines a set point SP_{TG} for the gas turbine 2 on the basis of the gross power P_{0G} to be delivered, to a current power P_{TV} supplied by the steam turbine and to a variation of current power ΔP_{TV}^{*} of the steam turbine 3. The variation of current power ΔP_{TV}^{*} is determined by the correction network 40 and indicates a contribution of the steam turbine 3 to the primary regulation.

In greater detail, the third calculation module 41 calculates a variation of required power ΔP_{TV} for the intervention of the steam turbine 3 in the primary regulation during a subfrequency transient. For this purpose, the third calculation module 41 preliminarily determines a required contribution KE_{F} starting from the frequency error E_{F}, supplied by the detection module 35, and from a coefficient K indicating the level of participation in the primary regulation of the steam turbine 3 (as compared to nominal operating conditions, in practice, an over-power is required of the plant 1 to compensate for the frequency error E_{F}; the coefficient K indicates what amount of the over-power necessary is to be supplied by the steam turbine 3).

The filter module 42 determines a variation of current power Δ P_{TV}^{*} by an operation of high-pass filtering of the variation of required power ΔP_{TV}, which takes into account substantially a time constant due to the steam generator 7 (in practice, the variation of required power ΔP_{TV} decays with the time constant of the steam generator 7). The variation of current power ΔP_{TV}^{*} indicates the contribution of the steam turbine 3 to the primary regulation, i.e., of the power supplied in excess by the steam turbine 3 during the subfrequency transient due to its participation in the primary regulation.

The second calculation module 38 subtracts the variation of current power ΔP_{TV}^{*} from the current power Δ_{TV} of the steam turbine 3 so that the variation of current power ΔP_{TV}^{*} does not affect the calculation of the second set point SP_{TG} for the gas turbine 2.

In particular, the action of the correction network 40 prevents displacements of the second set point SP_{TG} of the gas turbine 2 following upon increase in the power supplied by the steam turbine 3 during the subfrequency transients. In particular, the control device 10 tends to maintain a general set point of the plant, corresponding to the nominal operation conditions, unvaried. In the absence of other solutions, the increase in the power supplied by the steam turbine 3 following upon a request for regulation would be counterbalanced by a decrease in the set point of the gas turbine 3. In practice, the correction network 40 operates to "mask" the intervention of the steam turbine 3 as described above, maintaining the second set point SP_{TG} of the gas turbine 2 unchanged.

## Claims

1. A method for controlling a combined-cycle plant, comprising:
regulating a high-pressure steam flowrate (Q_{HP}) fed to a high-pressure section (12) of a steam turbine (3);
supplying to a mixing node (17) an output flowrate (Q_{O}) from the high-pressure section (12) of the steam turbine (3) and a superheated steam flowrate (Q_{S}) supplied by an intermediate-pressure element (19) of a steam generator (7) to obtain an intermediate-pressure steam flowrate (Q_{IP}) downstream of the mixing node (17);
supplying the intermediate-pressure steam flowrate (Q_{IP}) to an intermediate-pressure section (13) of the steam turbine (3):
controlling a first supply valve (15a), for regulating the high-pressure steam flowrate (Q_{HP}) supplied to the high-pressure section (12) of the steam turbine (3);
controlling a second supply valve (15b), for regulating the intermediate-pressure steam flowrate (Q_{IP}) supplied to the intermediate-pressure section (13) of the steam turbine (3);
controlling a regulation valve (30) arranged along a duct (28) between the intermediate-pressure element (19) of the steam generator (7) and the mixing node (17);
detecting subfrequency transients of a network (36) for distribution of electrical energy connected to the combined-cycle plant (1); and
increasing the high-pressure steam flowrate (Q_{HP}) in response to a subfrequency transient; wherein
controlling the regulation valve (30) comprises:
maintaining the regulation valve (30) at a partial opening degree in nominal working conditions, in the absence of subfrequency transients;
increasing the opening degree of the regulation valve (30) in response to a subfrequency transient so as to compensate for an increase in pressure at output from the high-pressure section (12) of the steam turbine (3) with a decrease of a head loss associated to the regulation valve (30) and prevent a reduction in the superheated steam flowrate (Q_{S}).

2. The method according to Claim 1, wherein the opening degree of the regulation valve (30) is increased as a function of a frequency error (E_{F}).

3. The method according to Claim 1 or 2, comprising:
determining a gross-power reference (P_{0G}) indicating the overall power to be delivered; and
determining a set point (SP_{TG}) of a gas turbine (2) of the combined-cycle plant (1) on the basis of the gross-power reference (P_{0G}) and of an current power (P_{TV}) supplied by the steam turbine (3).

4. The method according to Claim 3, wherein determining the set point (SP_{TG}) comprises masking a variation of current power (ΔP_{TV}*) supplied by the steam turbine (3) in response to a subfrequency transient.

5. The method according to Claim 4, wherein masking comprises calculating the variation of current power (ΔP_{TV}*) and subtracting the variation of current power (ΔP_{TV}*) from the current power (P_{TV}) supplied by the steam turbine (3).

6. The method according to Claim 5, wherein calculating the variation of current power (ΔP_{TV}*) comprises:
calculating a variation of required power (ΔP_{TV}) in response to a subfrequency transient on the basis of a frequency error (E_{F}) and of a coefficient (K), indicative of a level of participation of the steam turbine in frequency regulation;
high-pass filtering the variation of required power (ΔP_{TV}).

7. A combined-cycle plant comprising:
a gas turbine (2);
a steam turbine (3), having a high-pressure section (12), and an intermediate-pressure section (13);
a steam generator (7), receiving exhaust fumes of the gas turbine and having a high-pressure element (18), for supplying a high-pressure steam flowrate (Q_{HP}) to be supplied to the high-pressure section (12) of the steam turbine (3), and an intermediate-pressure element (19), for supplying a superheated steam flowrate (Q_{S}) to be supplied to the intermediate-pressure section (13) of the steam turbine (3);
a mixing node (17), receiving the superheated steam flowrate (Q_{S}) from the intermediate-pressure element (19) of the steam generator (7) and an output flowrate (Q_{O}) of the high-pressure section (12) of the steam turbine (3);
a first supply valve (15a), for regulating the high-pressure steam flowrate (Q_{HP}) supplied to the high-pressure section (12) of the steam turbine (3);
a second supply valve (15b), for regulating the intermediate-pressure steam flowrate (Q_{IP}) supplied to the intermediate-pressure section (13) of the steam turbine (3);
a regulation valve (30), arranged along a duct (28) between the intermediate-pressure element (19) of the steam generator (7) and the mixing node (17); and
a control device (10);
wherein the control device (10) includes:
a first regulation module (33), for regulating the high-pressure steam flowrate (Q_{HP}) fed to the high-pressure section (12) of the steam turbine (3);
a second regulation module (34), for controlling the regulation valve (30);
a detection module (35), configured to detect subfrequency transients of a network (36) for distribution of electrical energy to which the combined-cycle plant (1) is connectable;
wherein the first regulation module (33) is configured to increase the high-pressure steam flowrate (Q_{HP}) in response to a subfrequency transient; wherein
the second regulation module (34) is configured to:
maintain the regulation valve (30) at a partial opening degree in nominal working conditions, in the absence of subfrequency transients;
increase the opening degree of the regulation valve (30) in response to a subfrequency transient so as to compensate for an increase in pressure at output from the high-pressure section (12) of the steam turbine (3) with a decrease of a head loss associated to the regulation valve (30) and prevent a reduction in the superheated steam flowrate (Q_{S}).

8. The plant according to Claim 7, wherein the second regulation module (34) is moreover configured to increase the opening degree of the regulation valve (30) as a function of a frequency error (E_{F}).

9. The plant according to Claim 7 or Claim 8, comprising:
a gas turbine (2);
a first calculation module (37), configured to determine a gross-power reference (P_{0G}) indicating the overall power to be delivered;
a second calculation module (38), configured to determine a second set point (SP_{TG}) of the gas turbine (2) on the basis of the a gross-power reference (P_{0G}) and of an current power (P_{TV}) supplied by the steam turbine (3).

10. The plant according to Claim 9, comprising a correction network (40), configured to calculate a variation of current power (ΔP_{TV}*) supplied by the steam turbine (3) in response to a subfrequency transient, and wherein the second calculation module (38) is configured to subtract the variation of current power (ΔP_{TV}*) from the current power (P_{TV}) supplied by the steam turbine (3).

11. The device according to Claim 10, wherein the correction network (40) comprises:
a third calculation module (41), configured to calculate a variation of required power (ΔP_{TV}) in response to a subfrequency transient, on the basis of a frequency error (E_{F}) and a coefficient (K) indicating a level of participation of the steam turbine in the frequency regulation; and
a filter module (42), for high-pass filtering of the variation of required power (ΔP_{TV}).

## Patentansprüche

1. Verfahren zur Steuerung eines Kombikraftwerks, das umfasst:
Regulieren eines Hochdruckdampfdurchflusses (Q_{HP}), der einem Hochdruckabschnitt (12) einer Dampfturbine (3) zugeführt wird;
Zuführen eines Ausgangdurchflusses (Q_{O}) von dem Hochdruckabschnitt (12) der Dampfturbine (3) und eines überhitzten Dampfdurchflusses (Q_{S}), der von einem Zwischendruckelement (19) eines Dampfgenerators (7) geliefert wird, zu einem Mischungsknoten (17), um einen Zwischendruckdampfdurchfluss (Q_{IP}) stromabwärts des Mischungsknotens (17) zu erhalten;
Zuführen des Zwischendruckdampfdurchflusses (Q_{IP}) zu einem Zwischendruckabschnitt (13) der Dampfturbine (3);
Steuern eines ersten Zufuhrventils (15a), um den Hochdruckdampfdurchfluss (Q_{HP}), der dem Hochdruckabschnitt (12) der Dampfturbine (3) zugeführt wird, zu regulieren;
Steuern eines zweiten Zufuhrventils (15b), um den Zwischendruckdampfdurchfluss (Q_{IP}), der dem Zwischendruckabschnitt (13) der Dampfturbine (3) zugeführt wird, zu regulieren;
Steuern eines Regulierungsventils (30), das entlang eines Leitungskanals (28) zwischen dem Zwischendruckelement (19) des Dampfgenerators (7) und dem Mischungsknoten (17) angeordnet ist;
Detektieren von Unterfrequenzschwankungen eines Netzes (36) für die Verteilung von elektrischer Energie, das an das Kombikraftwerk (1) angeschlossen ist; und
Erhöhen des Hochdruckdampfdurchflusses (Q_{HP}) als Reaktion auf eine Unterfrequenzschwankung; wobei
das Steuern des Regulierungsventils (30) umfasst:
Halten des Regulierungsventils (30) bei einem teilweisen Öffnungsgrad bei Nennarbeitsbedingungen bei Abwesenheit von Unterfrequenzschwankungen;
Erhöhen des Öffnungsgrads des Regulierungsventils (30) als Reaktion auf eine Unterfrequenzschwankung, um so einen Druckanstieg am Ausgang von dem Hochdruckabschnitt (12) der Dampfturbine (3) mit einer Abnahme eines Druckverlustes, der mit dem Regulierungsventil (30) verbunden ist, auszugleichen und eine Verringerung des überhitzten Dampfdurchflusses (Q_{S}) zu verhindern.

2. Verfahren nach Anspruch 1, wobei der Öffnungsgrad des Regulierungsventils (30) als eine Funktion eines Frequenzfehlers (E_{F}) erhöht wird.

3. Verfahren nach Anspruch 1 oder 2, das umfasst:
Bestimmen einer Bruttoleistungsreferenz (P_{OG}), die die gesamte Leistung angibt, die geliefert werden kann; und
Bestimmen eines Sollwerts (SP_{TG}) einer Gasturbine (2) des Kombikraftwerks (1) auf der Basis der Bruttoleistungsreferenz (P_{OG}) und einer Stromleistung (P_{TV}), die von der Dampfturbine (3) geliefert wird.

4. Verfahren nach Anspruch 3, wobei ein Bestimmen des Sollwerts (SP_{TG}) ein Maskieren einer Variation einer Stromleistung (ΔP_{TV}*), die von der Dampfturbine (3) als Reaktion auf eine Unterfrequenzschwankung geliefert wird, umfasst.

5. Verfahren nach Anspruch 4, wobei das Maskieren ein Berechnen der Variation einer Stromleistung (ΔP_{TV}*) und eine Subtraktion der Variation einer Stromleistung (ΔP_{TV}*) von der Stromleistung (P_{TV}), die von der Dampfturbine (3) geliefert wird, umfasst.

6. Verfahren nach Anspruch 5, wobei das Berechnen der Variation der Stromleistung (ΔP_{TV}*) umfasst:
Berechnen einer Variation einer erforderlichen Leistung (ΔP_{TV}) als Reaktion auf eine Unterfrequenzschwankung auf der Basis eines Frequenzfehlers (E_{F}) und eines Koeffizienten (K), der den Grad der Beteiligung der Dampfturbine an der Frequenzregulierung angibt;
Hochpassfiltern der Variation der erforderlichen Leistung (ΔP_{TV}).

7. Kombikraftwerk, das umfasst:
eine Gasturbine (2);
eine Dampfturbine (3) mit einem Hochdruckabschnitt (12) und mit einem Zwischendruckabschnitt (13);
einen Dampfgenerator (7), der die Abgase der Gasturbine empfängt und ein Hochdruckelement (18) aufweist, um einen Hochdruckdampfdurchfluss (Q_{HP}), der dem Hochdruckabschnitt (12) der Dampfturbine (3) zugeführt werden soll, zuzuführen, und ein Zwischendruckelement (19) aufweist, um einen überhitzten Dampfdurchfluss (Q_{S}), der dem Zwischendruckabschnitt (13) der Dampfturbine (3) zugeführt werden soll, zuzuführen;
einen Mischungsknoten (17), der den überhitzten Dampfdurchfluss (Qs) von dem Zwischendruckelement (19) des Dampfgenerators (7) und einen Ausgangdurchfluss (Q_{O}) des Hochdruckabschnitts (12) der Dampfturbine (3) empfängt;
ein erstes Zufuhrventil (15a), um den Hochdruckdampfdurchfluss (Q_{HP}), der dem Hochdruckabschnitt (12) der Dampfturbine (3) zugeführt wird, zu regulieren;
ein zweites Zufuhrventil (15b), um den Zwischendruckdampfdurchfluss (Q_{IP}), der dem Zwischendruckabschnitt (13) der Dampfturbine (3) zugeführt wird, zu regulieren;
ein Regulierungsventil (30), das entlang eines Leitungskanals (28) zwischen dem Zwischendruckelement (19) des Dampfgenerators (7) und dem Mischungsknoten (17) angeordnet ist; und
eine Steuervorrichtung (10);
wobei die Steuervorrichtung (10) enthält:
ein erstes Regulierungsmodul (33), um den Hochdruckdampfdurchfluss (Q_{HP}), der dem Hochdruckabschnitt (12) der Dampfturbine (3) zugeführt wird, zu regulieren;
ein zweites Regulierungsmodul (34), um das Regulierungsventil (30) zu steuern;
ein Detektionsmodul (35), das konfiguriert ist, Unterfrequenzschwankungen eines Netzes (36) für die Verteilung von elektrischer Energie, das an das Kombikraftwerk (1) anschließbar ist, zu detektieren;
wobei das erste Regulierungsmodul (33) konfiguriert ist, den Hochdruckdampfdurchfluss (Q_{HP}) als Reaktion auf eine Unterfrequenzschwankung zu erhöhen;
wobei das zweite Regulierungsmodul (34) konfiguriert ist:
das Regulierungsventil (30) bei Abwesenheit von Unterfrequenzschwankungen auf einem teilweisen Öffnungsgrad unter Nennarbeitsbedingungen zu halten;
den Öffnungsgrad des Regulierungsventils (30) als Reaktion auf eine Unterfrequenzschwankung zu erhöhen, um so einen Druckanstieg am Ausgang von dem Hochdruckabschnitt (12) der Dampfturbine (3) mit einer Abnahme eines Druckverlustes, der mit dem Regulierungsventil (30) verbunden ist, auszugleichen und eine Verringerung des überhitzten Dampfdurchflusses (Q_{S}) zu verhindern.

8. Kraftwerksanlage nach Anspruch 7, wobei das zweite Regulierungsmodul (34) darüber hinaus konfiguriert ist, den Öffnungsgrad des Regulierungsventils (30) als eine Funktion eines Frequenzfehlers (E_{F}) zu erhöhen.

9. Kraftwerksanlage nach Anspruch 7 oder 8, die umfasst:
eine Gasturbine (2);
ein erstes Berechnungsmodul (37), das konfiguriert ist, eine Bruttoleistungsreferenz (P_{OG}) zu bestimmen, die die gesamte Leistung angibt, die geliefert werden kann;
ein zweites Berechnungsmodul (38), das konfiguriert ist, einen zweiten Sollwert (SP_{TG}) der Gasturbine (2) auf der Basis der Bruttoleistungsreferenz (P_{OG}) und einer Stromleistung (P_{TV}), die von der Dampfturbine (3) geliefert wird, zu bestimmen.

10. Kraftwerksanlage nach Anspruch 9, die ein Korrekturnetz (40) umfasst, das konfiguriert ist, eine Variation einer Stromleistung (ΔP_{TV}*), die von der Dampfturbine (3) als Reaktion auf eine Unterfrequenzschwankung geliefert wird, zu berechnen, wobei das zweite Berechnungsmodul (38) konfiguriert ist, die Variation einer Stromleistung (ΔP_{TV}*) von der Stromleistung (P_{TV}), die von der Dampfturbine (3) geliefert wird, zu subtrahieren.

11. Vorrichtung nach Anspruch 10, wobei das Korrekturnetz (40) umfasst:
ein drittes Berechnungsmodul (41), das konfiguriert ist, eine Variation einer erforderlichen Leistung (ΔP_{TV}) als Reaktion auf eine Unterfrequenzschwankung auf der Basis eines Frequenzfehlers (E_{F}) und eines Koeffizienten (K), der den Grad der Beteiligung der Dampfturbine an der Frequenzregulierung angibt, zu berechnen; und
ein Filtermodul (42) für eine Hochpassfilterung der Variation der erforderlichen Leistung (ΔP_{TV}).

## Revendications

1. Procédé de commande d'une installation à cycle combiné, comprenant le fait :
de réguler un débit de vapeur haute pression (Q_{HP}) alimenté à une section haute pression (12) d'une turbine à vapeur (3) ;
de fournir à un noeud de mélange (17) un débit de sortie (Q₀) à partir de la section haute pression (12) de la turbine à vapeur (3) et un débit de vapeur surchauffée (Q_{S}) fourni par un élément à pression intermédiaire (19) d'un générateur de vapeur (7) pour obtenir un débit de vapeur à pression intermédiaire (Q_{IP}) en aval du noeud de mélange (17) ;
de fournir le débit de vapeur à pression intermédiaire (Q_{IP}) à une section à pression intermédiaire (13) de la turbine à vapeur (3) ;
de commander une première vanne d'alimentation (15a), pour réguler le débit de vapeur haute pression (Q_{HP}) fourni à la section haute pression (12) de la turbine à vapeur (3) ;
de commander une deuxième vanne d'alimentation (15b), pour réguler le débit de vapeur à pression intermédiaire (Q_{IP}) fourni à la section à pression intermédiaire (13) de la turbine à vapeur (3) ;
de commander une vanne de régulation (30) disposée le long d'un conduit (28) entre l'élément à pression intermédiaire (19) du générateur de vapeur (7) et le noeud de mélange (17) ;
de détecter des transitoires de sous-fréquence d'un réseau (36) pour la distribution de l'énergie électrique connecté à l'installation à cycle combiné (1) ; et
d'augmenter le débit de vapeur haute pression (Q_{HP}) en réponse à un transitoire de sous-fréquence ; où
la commande de la vanne de régulation (30) comprend le fait :
de maintenir la vanne de régulation (30) à un degré d'ouverture partiel dans les conditions de fonctionnement nominales, en absence de transitoires de sous-fréquence ;
d'augmenter le degré d'ouverture de la vanne de régulation (30) en réponse à un transitoire de sous-fréquence de manière à compenser une augmentation de la pression au niveau de la sortie de la section haute pression (12) de la turbine à vapeur (3) avec une diminution d'une perte de charge associée à la vanne de régulation (30) et à empêcher une réduction du débit de vapeur surchauffée (Q_{S}).

2. Procédé selon la revendication 1, dans lequel le degré d'ouverture de la vanne de régulation (30) augmente en fonction d'une erreur de fréquence (E_{F}).

3. Procédé selon la revendication 1 ou 2, comprenant le fait :
de déterminer une référence de puissance brute (P_{0G}) indiquant la puissance globale à délivrer ; et
de déterminer un point de consigne (SP_{TG}) d'une turbine à gaz (2) de l'installation à cycle combiné (1) sur la base de la référence de puissance brute (P_{0G}) et d'une puissance actuelle (P_{TV}) fournie par la turbine à vapeur (3).

4. Procédé selon la revendication 3, dans lequel la détermination du point de consigne (SP_{TG}) comprend le fait de masquer une variation d'une puissance actuelle (ΔP_{TV}*) fournie par la turbine à vapeur (3) en réponse à un transitoire de sous-fréquence.

5. Procédé selon la revendication 4, dans lequel le masquage comprend le fait de calculer la variation de la puissance actuelle (ΔP_{TV}*) et de soustraire la variation de puissance actuelle (ΔP_{TV}*) de la puissance actuelle (P_{TV}) fournie par la turbine à vapeur (3).

6. Procédé selon la revendication 5, dans lequel le calcul de la variation de la puissance actuelle (ΔP_{TV}*) comprend le fait :
de calculer une variation de la puissance nécessaire (ΔP_{TV}) en réponse à un transitoire de sous-fréquence sur la base d'une erreur de fréquence (E_{F}) et d'un coefficient (K), qui indique un niveau de participation de la turbine à vapeur dans la régulation de fréquence ;
d'effectuer une filtration passe-haut de la variation de la puissance nécessaire (ΔP_{TV}).

7. Installation à cycle combiné comprenant :
une turbine à gaz (2) ;
une turbine à vapeur (3), ayant une section haute pression (12), et une section à pression intermédiaire (13) ;
un générateur de vapeur (7), recevant des gaz d'échappement de la turbine à gaz et ayant un élément à haute pression (18), pour fournir un débit de vapeur haute pression (Q_{HP}) à fournir à la section haute pression (12) de la turbine à vapeur (3), et un élément à pression intermédiaire (19), pour fournir un débit de vapeur surchauffée (Q_{S}) à fournir à la section à pression intermédiaire (13) de la turbine à vapeur (3) ;
un noeud de mélange (17), recevant le débit de vapeur surchauffée (Q_{S}) à partir de l'élément à pression intermédiaire (19) du générateur de vapeur (7) et un débit de sortie (Q_{O}) de la section haute pression (12) de la turbine à vapeur (3) ;
une première vanne d'alimentation (15a), pour réguler le débit de vapeur haute pression (Q_{HP}) fourni à la section haute pression (12) de la turbine à vapeur (3) ;
une deuxième vanne d'alimentation (15b), pour réguler le débit de vapeur à pression intermédiaire (Q_{IP}) fourni à la section à pression intermédiaire (13) de la turbine à vapeur (3) ;
une vanne de régulation (30), disposée le long d'un conduit (28) entre l'élément à pression intermédiaire (19) du générateur de vapeur (7) et le noeud de mélange (17) ; et
un dispositif de commande (10) ;
où le dispositif de commande (10) comporte :
un premier module de régulation (33), pour réguler le débit de vapeur haute pression (Q_{HP}) alimenté à la section haute pression (12) de la turbine à vapeur (3) ;
un deuxième module de régulation (34), pour commander la vanne de régulation (30) ;
un module de détection (35), configuré pour détecter des transitoires de sous-fréquence d'un réseau (36) pour la distribution de l'énergie électrique auquel l'installation à cycle combiné (1) peut être connectée,
où le premier module de régulation (33) est configuré pour augmenter le débit de vapeur haute pression (Q_{HP}) en réponse à un transitoire de sous-fréquence ; où
le deuxième module de régulation (34) est configuré pour :
maintenir la vanne de régulation (30) à un degré d'ouverture partiel dans les conditions de fonctionnement nominales, en absence de transitoires de sous-fréquence ;
augmenter le degré d'ouverture de la vanne de régulation (30) en réponse à un transitoire de sous-fréquence de manière à compenser une augmentation de la pression au niveau de la sortie de la section haute pression (12) de la turbine à vapeur (3) avec une diminution de la perte de charge associée à la vanne de régulation (30) et à empêcher une réduction du débit de vapeur surchauffée (Q_{S}).

8. Installation selon la revendication 7, dans laquelle le deuxième module de régulation (34) est en outre configuré pour augmenter le degré d'ouverture de la vanne de régulation (30) en fonction d'une erreur de fréquence (E_{F}).

9. Installation selon la revendication 7 ou 8, comprenant :
une turbine à gaz (2) ;
un premier module de calcul (37), configuré pour déterminer une référence de puissance brute (P_{0G}) indiquant la puissance totale à délivrer ;
un deuxième module de calcul (38), configuré pour déterminer un deuxième point de consigne (SP_{TG}) de la turbine à gaz (2) sur la base de la référence de puissance brute (P_{0G}) et d'une puissance actuelle (P_{TV}) fournie par la turbine à vapeur (3).

10. Installation selon la revendication 9, comprenant un réseau de correction (40), configuré pour calculer une variation de puissance actuelle (ΔP_{TV}*) fournie par la turbine à vapeur (3) en réponse à un transitoire de sous-fréquence, et où le deuxième module de calcul (38) est configuré pour soustraire la variation de puissance actuelle (ΔP_{TV}*) de la puissance actuelle (P_{TV}) fournie par la turbine à vapeur (3).

11. Dispositif selon la revendication 10, dans lequel le réseau de correction (40) comprend :
un troisième module de calcul (41), configuré pour calculer une variation de puissance nécessaire (ΔP_{TV}) en réponse à un transitoire de sous-fréquence, sur la base d'une erreur de fréquence (E_{F}) et d'un coefficient (K) indiquant un niveau de participation de la turbine à vapeur dans la régulation de la fréquence ; et
un module de filtre (42), destiné à effectuer le filtrage passe-haut de la variation de puissance nécessaire (ΔP_{TV}).
